(19) Europäisches Patentamt
European Patent Office
Office européen des brevets

(11) **EP 4 538 317 A1**

(12) **EUROPEAN PATENT APPLICATION**
published in accordance with Art. 153(4) EPC

(43) Date of publication:
**16.04.2025 Bulletin 2025/16**

(21) Application number: **23823823.2**

(22) Date of filing: **08.06.2023**

(51) International Patent Classification (IPC):
**C08J 5/04** (2006.01)

(52) Cooperative Patent Classification (CPC):
**C08J 5/04**

(86) International application number:
**PCT/JP2023/021355**

(87) International publication number:
**WO 2023/243532 (21.12.2023 Gazette 2023/51)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **13.06.2022 JP 2022095041**

(71) Applicant: **I.S.T Corporation**
**Otsu-shi, Shiga 520-2153 (JP)**

(72) Inventor: **ONIWA, Keiichiro**
**Otsu-shi, Shiga 520-2153 (JP)**

(74) Representative: **TBK**
**Bavariaring 4-6**
**80336 München (DE)**

(54) **FIBER-REINFORCED RESIN MOLDED BODY**

(57)     [Problem] An object of the present invention is to provide a fiber-reinforced resin molded body having excellent dielectric properties, a light weight, and a high strength.

[Solution] A fiber-reinforced resin molded body according to the present invention includes a polyimide fiber and a resin. The dielectric constant of the fiber-reinforced resin molded body is 4.0 or less at frequencies in the frequency of 5GHz or more and 80GHz or less, and the dielectric loss tangent thereof is 0.02 or less at the same frequency. The tensile strength of the fiber-reinforced resin molded body is preferably in the range of 0. 5GPa or more and 2. 5GPa, and the tensile modulus of elasticity is preferably in the range of 25GPa or more and 120GPa or less.

[Selection Diagram] None

EP 4 538 317 A1

## Description

TECHNICAL FIELD

The present invention relates to a fiber-reinforced resin molded body having excellent dielectric properties.

BACKGROUND ART

In recent years, with further improvement in function, speed, and size of electronic devices such as semiconductor devices and mobile communication devices, the speed of transmission and reception of electric signals has been increased and high-density wiring has been developed. As a result, the band of electric signals in electronic components and information communication devices such as semiconductor substrates, printed circuit boards, and EMCs (epoxy molding compounds) tends to be increased. The transmission loss of an electric signal is proportional to the dielectric loss tangent of an insulating material and the frequency of the electric signal. Therefore, as the frequency of the electric signal is higher, the transmission loss is larger, which causes attenuation of the electric signal, and the transmission reliability of the electric signal is lowered. Further, a problem of heat generation due to conversion of transmission loss into heat may occur. Therefore, in the high frequency region, an insulating material having a very small dielectric loss tangent is required.

For example, Japanese Unexamined Patent Publication No. 2016-166347 proposes a prepreg comprising a woven fabric and / or a nonwoven fabric and a semi-cured product of a resin composition containing an epoxy resin, a curing agent and a fluororesin filler, which is filled in the woven fabric and / or the nonwoven fabric and covers the surface thereof, for the purpose of providing a high-frequency circuit board having excellent dielectric properties.

PRIOR ART DOCUMENT

PATENT DOCUMENT

Patent Document 1: Japanese Patent Application Laid-Open No. 2016 -166347

SUMMARY OF THE INVENTION

PROBLEM TO BE SOLVED BY THE INVENTION

However, in recent years, there has been a demand for further increasing the transmission speed of electric signals, and there has been a demand for a resin molded article having not only a low dielectric constant but also a dielectric loss tangent for reducing transmission loss.

The present invention has been made in view of the above background, and an object of the present invention is to provide a fiber-reinforced resin molded body which is excellent in dielectric properties, has high strength, and is lightweight.

MEANS FOR SOLVING THE PROBLEM

A fiber-reinforced resin molded body according to a first aspect of the present invention includes a polyimide fiber and a resin. The dielectric constant of the fiber-reinforced resin molded body in the frequency band of 5GHz or more and 80GHz or less is 4.0 or less, and the dielectric loss tangent thereof in the same frequency band is 0.02 or less.

In the fiber-reinforced resin molded body according to the first aspect of the present invention, it is preferable that the tensile strength is in a range of 0. 5GPa or more and 2. 5GPa, and the tensile modulus is in a range of 25GPa or more and 120GPa or less.

In the fiber-reinforced resin molded body according to the first aspect of the present invention, the polyimide fiber is preferably obtained by a polymerization reaction of an aromatic tetracarboxylic dianhydride and an aromatic diamine. The aromatic tetracarboxylic dianhydride is at least one of pyromellitic dianhydride and 3,3',4,4'-biphenyltetracarboxylic dianhydride, and the aromatic diamine is at least one of 4,4'-diaminodiphenyl ether and paraphenylene diamine.

In the fiber-reinforced resin molded body according to the first aspect of the present invention, the tensile modulus of the polyimide fiber is preferably in the range of 100GPa or more and 170GPa or less.

The prepreg according to the second aspect of the present invention is used for producing the above-mentioned fiber-reinforced resin molded body. The prepreg includes polyimide fibers and a resin or a resin precursor. The "resin precursor" as used herein means a monomer composition (which may contain a crosslinking agent or the like) before curing or a polymer precursor.

EFFECTS OF THE INVENTION

According to the present invention, it is possible to provide a fiber-reinforced resin molded body which is excellent in dielectric properties, high in strength, and light in weight.

DETAILED DESCRIPTION OF THE INVENTION

<Configuration of Fiber-Reinforced Resin Molded Body According to Embodiment of the Present Invention>

The fiber-reinforced resin molded body according to the embodiment of the present invention is mainly made of polyimide fibers and a resin.

The above-mentioned polyimide fiber is preferably obtained by a polymerization reaction of an aromatic tetracarboxylic dianhydride and an aromatic diamine. The aromatic tetracarboxylic dianhydride is preferably at least one of pyromellitic dianhydride and 3,3',4,4'-biphenyltetracarboxylic dianhydride. The aromatic diamine is preferably at least one of 4,4'-diaminodiphenyl ether and para-phenylene diamine.

The polyimide fiber may be used in combination with a glass fiber, an aramid fiber, a (liquid crystal) polyester fiber, a polyacrylic fiber, a carbon fiber, or the like, as long as the gist of the present invention is not impaired. However, from the viewpoint of dielectric properties such as dielectric constant and dielectric loss tangent of the fiber-reinforced resin molded body, it is preferable to use only the polyimide fiber.

The tensile modulus of the polyimide fiber is preferably in the range of 100GPa or more and 170GPa or less, and more preferably in the range of 110GPa or more and 150GPa or less.

In addition, in order to increase the strength of the fiber-reinforced resin molded body according to the embodiment of the present invention, the fiber diameter of the polyimide fiber is preferably in a range of 10 μm or more and 18 μm or less. The productivity of the polyimide fiber can be maintained well, and the rigidity of the polyimide fiber can be made good, and further, the handling property thereof can be maintained by setting the fiber diameter of the polyimide fiber to the above-mentioned range. The volume content of the polyimide fibers in the fiber-reinforced resin molded body is preferably in the range of 40% by volume or more and 70% by volume or less. When the volume content of the polyimide fibers is within this range, the polyimide fibers can exhibit high strength and high elasticity in the fiber-reinforced resin molded body, and the adhesion performance between the resin and the fibers can be favorably maintained, and thus voids can be reduced. The volume content of the polyimide fibers is more preferably in the range of 45% by volume or more and 65% by volume or less.

Examples of the resin include thermosetting resins such as epoxy resins, phenol resins, polyimide resins, unsaturated polyester resins, and polyphenylene ether resins, and thermoplastic resins such as polyimide resins, polyphenylene ether resins, polysulfone resins, and fluorine resins such as polytetrafluoroethylene resins and perfluoroalkoxy fluorine resins. Among these resins, epoxy resins and polyimide resins are more preferable because they have a good balance between electrical properties and adhesion.

Examples of the epoxy resin include bisphenol A epoxy resin, bisphenol F epoxy resin, bisphenol S epoxy resin, phenol novolac epoxy resin, bisphenol A novolac epoxy resin, cresol novolac epoxy resin, diaminodiphenylmethane epoxy resin, and epoxy resins obtained by halogenating a part of hydrogen atoms in these epoxy resin structures to make the epoxy resins flame-retardant. Examples of the curing agent for the epoxy resin include amide curing agents such as dicyandiamide and aliphatic polyamide, amine curing agents such as diaminodiphenylmethane and triethylenediamine, phenol curing agents such as phenol novolac resin and bisphenol A novolac resin, acid anhydride compounds, mercaptan compounds, phenol resins, and amino resins.

Examples of the polyimide resin include a polyimide resin formed from an aromatic tetracarboxylic dianhydride and an aromatic diamine. Examples of the aromatic tetracarboxylic dianhydride include pyromellitic dianhydride, 1,2,5,6-naphthalenetetracarboxylic dianhydride, 1,4,5,8-naphthalenetetracarboxylic dianhydride, 2,3,6,7-naphthalenetetracarboxylic dianhydride, 2,2',3,3'-biphenyltetracarboxylic dianhydride, 2,3,3'4'-biphenyltetracarboxylic dianhydride, 3,3',4,4'-biphenyltetracarboxylic dianhydride (BPDA), 2,2',3,3'-benzophenonetetracarboxylic dianhydride, 2,3,3',4'-benzophenonetetracarboxylic dianhydride, 3,3',4,4'-benzophenonetetracarboxylic dianhydride (BTDA), bis (3,4-dicarboxyphenyl) sulfone dianhydride, bis (2,3-dicarboxyphenyl) methane dianhydride, bis (3,4-dicarboxyphenyl) methane dianhydride, 1,1-bis (2,3-dicarboxyphenyl) ethane dianhydride, 1,1-bis (3,4-dicarboxyphenyl) ethane dianhydride, 2,2-bis [3,4-(dicarboxyphenoxy) phenyl] propane dianhydride (BPADA), 4,4'-(hexafluoroisopropylidene) diphthalic anhydride, oxydiphthalic anhydride (ODPA), bis (3,4-dicarboxyphenyl) sulfone dianhydride, bis (3,4-dicarboxyphenyl) sulfoxide dianhydride, thiodiphthalic dianhydride, 3,4,9,10-perylenetetracarboxylic dianhydride, 2,3,6,7-anthracenetetracarboxylic dianhydride, 1,2,7,8-phenanthrenetetracarboxylic dianhydride, 9,9-bis (3,4-dicarboxyphenyl) fluorene dianhydride, 9,9-bis [4-(3,4'-dicarboxyphenoxy) phenyl] fluorene dianhydride, and other aromatic tetracarboxylic dianhydrides, cyclobutanetetracarboxylic dianhydride, 1,2,3,4-cyclopentanetetracarboxylic dianhydride, 2,3,4,5-tetrahydrofurantetracarboxylic dianhydride, 1,2,4,5-cyclohexanetetracarboxylic dianhydride, 3,4-dicarboxy-1-cyclohexylsuccinic dianhydride, 3,4-dicarboxy-1, 1,2,3,4-tetrahydro-1-naphthalenesuccinic dianhydride. Examples of the aromatic diamine include 4,4'-diaminodiphenyl ether, para-phenylene diamine (PPD), meta-phenylene diamine (MPDA), 2,5-diaminotoluene, 2,6-diaminotoluene, 4,4'-diaminobiphenyl, 3,3'-dimethyl-4,4'-diaminobiphenyl, 3,3'-dimethoxy-4,4'-diaminobiphenyl, 2,2-bis (trifluoromethyl)-4,4'-diaminobiphenyl, 3,3'-diaminodiphenylmethane, 4,4'-diaminodiphenylmethane (MDA), 2,2-bis-(4-aminophenyl) propane, 3,3'-diaminodiphenylsulfone (33DDS), 4,4'-diaminodiphenylsulfone (44DDS), 3,3'-diaminodiphenylsulfide, 4,4'-diaminodiphenylsulfide, 3,3'-diaminodiphenyl ether, 3,4'-diaminodiphenyl ether (34ODA), 1,5-diaminonaphthalene, 4,4'-diaminodiphenyldiethylsilane, 4,4'-diaminodiphenylsilane, 4,4'-diaminodiphenylethylphosphineoxide, 1,3-bis (3-aminophenoxy) benzene (133APB), 1,3-bis (4-aminophenoxy) benzene (134APB), 1,4-bis (4-aminophenoxy) benzene, bis [4-(3-aminophenoxy) phenyl] sulfone (BAPSM), bis [4-(4-aminophenoxy) phenyl] sulfone (BAPS), 2,2-bis [4-(4-aminophenoxy) phenyl] propane (BAPP), 2,2-bis (3-aminophenyl) 1,1,1,3,3,3-hexafluoropropane, 2,2-bis (4-aminophenyl) 1,1,1,3,3,3-hexafluoropropane, 9,9-bis (4-aminophenyl) fluorene.

The fiber-reinforced resin molded body according to the embodiment of the present invention has a dielectric constant of 4.0 or less and a dielectric loss tangent of 0.02 or less in the frequency band of 5GHz or more and 80GHz or less. The dielectric constant is preferably in the range of 1.0 or more and 4.0 or less, and the dielectric loss tangent is preferably in the range of 0 or more and 0.02 or less. The dielectric constant is more preferably in the range of 1.0 or more and 3.5 or less, and the dielectric loss tangent is more preferably in the range of 0 or more and 0.015 or less. This is because the transmission speed can be increased.

The dielectric constant and a dielectric loss tangent of fiber-reinforced resin molded body according to the embodiment of the present invention has no dependency on frequency even in a wide range of frequency of 5GHz or more and 80GHz or less. Thus, the fiber-reinforced resin molded body can be suitably used in the fields of housings or components of satellite mobile phones and next-generation mobile phones (1. 0GHz to 2. 5GHz), housings or components of network-compatible terminals (personal computers, mobile phones, portable games, tablets, and portable music players), housings or components of wireless LANs (5GHz to 60GHz), and housings or components of wireless communications: AWA (22GHz to 45GHz).

The tensile strength and tensile modulus of the fiber-reinforced resin molded body according to the embodiment of the present invention depend on the fiber direction and the fiber volume content of the fiber-reinforced resin molded body. Therefore, in order to adjust the tensile strength and the tensile elastic modulus of the fiber-reinforced resin molded body, it is necessary to appropriately adjust the fiber direction and the fiber volume content of the fiber-reinforced resin molded body. For example, when all the fibers in the fiber-reinforced resin molded body are oriented in the same direction, the tensile strength of the fiber-reinforced resin molded body in the fiber direction (the longitudinal direction of the fibers) is preferably in the range of 0. 5GPa or more and 2. 5GPa or less, more preferably in the range of 0. 75GPa or more and 2. 5GPa or less, and still more preferably in the range of 1. 0GPa or more and 2. 5GPa or less. Under the same conditions, the tensile modulus of the fiber-reinforced resin molded body is preferably in the range of 25GPa or more and 120GPa or less, more preferably in the range of 30GPa or more and 120GPa or less, and still more preferably in the range of 35GPa or more and 120GPa or less.

<Method for Manufacturing Fiber-Reinforced Resin Molded Body According to Embodiment of the Present Invention>

The fiber-reinforced resin molded body according to the embodiment of the present invention can be molded by either a method of molding via a prepreg or a method of molding without via a prepreg. The polyimide fiber may be a long fiber or a short fiber cut to an arbitrary length. Examples of the method via a prepreg include a method in which a plurality of prepregs obtained by impregnating a fiber base material made of the above-described fiber with a resin are laminated, and then the laminate is cured by heating and pressing. In such a method, as the form of the fiber base material, a so-called UD sheet in which fibers are arranged in one direction, or a woven or knitted product of a filament yarn of long fibers can be preferably used. Examples of the woven fabric include multiaxial woven fabrics such as a bidirectional woven fabric and a triaxial woven fabric. Examples of the knitted fabric include those knitted by weft knitting machines such as circular knitting machines, and warp knitting machines such as tricot knitting machines, raschel knitting machines, and Milanese knitting machines. Examples of the method without using a prepreg include a method in which a varnish containing the above-described resin is prepared, the varnish is impregnated into a fiber base material, and then the varnish is cured by heating and pressing. Specific examples of the method include a hand lay-up method, a filament winding method, and a pultrusion method.

<Working Examples and Comparative Examples>

Hereinafter, Working Examples and Comparative Examples will be described in detail, but the present invention is not limited to these Working Examples.

**Working Example 1**

1. Preparation of Polyimide Fiber

136g of para-phenylenediamine (PPD) and 2,224g of N-methylpyrrolidone were charged into a reactor, and PPD was dissolved in N-methylpyrrolidone. Next, 259.0g of 3,3',4,4'-biphenyltetracarboxylic dianhydride (BPDA) and 82.30g of pyromellitic dianhydride (PMDA) were put into the above-described reactor, and PMDA and PPD were polymerized at room temperature. As a result, a polyimide precursor solution having a concentration of 17.7% by weight was obtained. Next, a polyimide precursor solution for spinning was prepared by adding a solution in which 21.41g of 1,3-diazole was dissolved in 40.41g of N-methylpyrrolidone to the polyimide precursor solution. Next, the polyimide precursor solution for spinning was discharged into a coagulation bath containing water as a main component by using a discharging machine for spinning to obtain a polyimide precursor fiber. After the polyimide precursor fiber was then washed with water, the polyimide precursor fiber was stretched, and heated to obtain a polyimide fiber.

The fiber diameter and tensile properties of the obtained polyimide fiber were measured by the following methods.

(1) Fiber Diameter

The fineness of the polyimide fiber obtained as described above was measured using an autovibro-type fineness measuring apparatus DC21manufactured by Search Co., Ltd. The fiber diameter of the polyimide fiber was calculated from the measured fineness and the specific gravity of the polyimide fiber, and the value was 14 $\mu$m.

(2) Tensile Properties

The tensile modulus (cN / dtex) and tensile strength (cN / dtex) of the polyimide fiber obtained as described above were measured by a method in accordance with "JISR7606". Then, the tensile elastic modulus (GPa) of the polyimide fiber was obtained from the conversion formula of elastic modulus (cN/dtex) $\times$ specific gravity $\div$ 10. On the other hand, the tensile strength (GPa) of the polyimide fiber was determined from the conversion formula of strength (cN/dtex) $\times$ specific gravity $\div$ 10. As a result, the tensile modulus of the polyimide fiber was 137GPa, and the tensile strength was 3. 1GPa.

2. Preparation of Fiber-Reinforced Resin Molded Body

The polyimide fibers obtained as described above were aligned in a certain direction so as to have a fiber weight of 56g / m$^2$, and then the aligned polyimide fibers were impregnated with an epoxy composition obtained by mixing 100 wt% of an epoxy base (JER828 manufactured by Mitsubishi Chemical Corporation) and 8 wt% of a curing agent (ADEKA Hardener EH-ADEKA Corporation, 3636AS), and the composition-impregnated polyimide fibers were heated in a thermostatic oven at 120 ° C. for 30 minutes to produce a UD prepreg. Next, the obtained UD prepreg was sandwiched between plate-shaped molds and bagged, and then the UD prepreg was heated and pressurized in an autoclave at 130 °C for 90 minutes at 6 atm to obtain a fiber-reinforced resin molded body. In this case, the temperature rising and falling rate of the autoclave was 2 °C / min. The thickness of the obtained fiber-reinforced resin molded body was 65 $\mu$m, and the volume content of the polyimide fibers was 56%.

The volume content Vf of the polyimide fiber was determined by the following formula (1).

$$Vf = Faw / \rho / T \times 100 \quad (1)$$

Here, Faw is the fiber weight (g/m$^2$) of the polyimide fibers, $\rho$ is the density (g/cm$^3$) of the polyimide fibers, and T is the thickness ($\mu$m) of the fiber-reinforced resin molded body. The density of polyimide fiber is 1.5g/cm$^3$.

The dielectric constant, dielectric loss tangent and tensile properties of the obtained fiber-reinforced resin molded body were measured by the following methods.

(1) Measurement of Dielectric Constant and Dielectric Loss Tangent in 5GHz to 80GHz

The dielectric constant ($\varepsilon$) and dielectric loss tangent of the fiber-reinforced resin molded body were measured in the 5GHz to 80GHz range using a vector network analyzer (Vector Network Analyzer N5290A manufactured by Keysight Technology), a split post resonator (manufactured by Keysight Technology), and a split cylinder resonator (manufactured by EM Lab). The dielectric constant at 5GHz of frequency was 3.35, the dielectric constant at 10GHz of frequency was 3.38, the dielectric constant at 20GHz of frequency was 3.42, the dielectric constant at 28GHz of frequency was 3.38, the dielectric constant at 40GHz of frequency was 3.36, the dielectric constant at 60GHz of frequency was 3.33, and the dielectric constant at 80GHz of frequency was 3.30. The dielectric loss tangent at 5GHz of frequency was 0.0123, the dielectric loss tangent at 10GHz of frequency was 0.0130, the dielectric loss tangent at 20GHz of frequency was 0.0143, the dielectric loss tangent at 28GHz of frequency was 0.0137, the dielectric loss tangent at 40GHz of frequency was 0.0140, the dielectric loss tangent at 60GHz of frequency was 0.0139, and the dielectric loss tangent at 80GHz of frequency was 0.0132.

(2) Tensile Properties

The obtained fiber-reinforced resin molded body was pulled in the fiber direction (the longitudinal direction of the fibers) of the fiber-reinforced resin molded body at 2mm/minute pulling rate using a precision universal tester (manufactured by Shimadzu Corporation. AGS-10kNG) to measure the tensile modulus of elasticity and the tensile strength of the fiber-reinforced resin molded body. The tensile strength of the fiber-reinforced resin molded body was 1. 45GPa, and the tensile modulus of elasticity was 41. 8GPa.

**Woking Example 2**

A fiber-reinforced resin molded body was obtained by the same method as that described in the Working Example 1 except that the fiber-reinforced resin molded body was produced so that the volume content of the polyimide fibers was 60%.

The thickness of the obtained fiber-reinforced resin molded body was 62 $\mu$m. The dielectric constant and dielectric loss tangent of the fiber-reinforced resin molded body in the 5GHz to 80GHz of frequency band and the tensile properties of the fiber-reinforced resin molded body were measured by the same method as in the Working Example 1. The dielectric constant at 5GHz of frequency was 3.48, the dielectric constant at 10GHz of frequency was 3.48, the dielectric constant at 20GHz of frequency was 3.46, the dielectric constant at 28GHz of frequency was 3.47, the dielectric constant at 40GHz of frequency was 3.42, the dielectric constant at 60GHz of frequency was 3.39, and the dielectric constant at 80GHz of frequency was 3.38. The dielectric loss tangent at 5GHz of frequency was 0.0120, the dielectric loss tangent at 10GHz of frequency was 0.0127, the dielectric loss tangent at 20GHz of frequency was 0.0129, the dielectric loss tangent at 28GHz of frequency was 0.0125, the dielectric loss tangent at 40GHz of frequency was 0.0124, the dielectric loss tangent at 60GHz of frequency was 0.0127, and the dielectric loss tangent at 80GHz of frequency was 0.0114. The tensile strength of the fiber-reinforced resin molded body was 1. 55GPa, and the tensile modulus was 44. 8GPa.

**Working Example 3**

A fiber-reinforced resin molded body was obtained by the same method as that described in the Working Example 1 except that the fiber-reinforced resin molded body was produced so that the volume content of the polyimide fibers was 40%.

The thickness of the obtained fiber-reinforced resin molded body was 93 μm. The dielectric constant and dielectric loss tangent of the fiber-reinforced resin molded body in the 5GHz to 80GHz of frequency band and the tensile properties of the fiber-reinforced resin molded body were measured by the same method as in the Working Example 1. The dielectric constant at 5GHz of frequency was 3.32, the dielectric constant at 10GHz of frequency was 3.34, the dielectric constant at 20GHz of frequency was 3.31, the dielectric constant at 28GHz of frequency was 3.18, the dielectric constant at 40GHz of frequency was 3.22, the dielectric constant at 60GHz of frequency was 3.20, and the dielectric constant at 80GHz of frequency was 3.12. The dielectric loss tangent at 5GHz of frequency was 0.0198, the dielectric loss tangent at 10GHz of frequency was 0.0189, the dielectric loss tangent at 20GHz of frequency was 0.0197, the dielectric loss tangent at 28GHz of frequency was 0.0194, the dielectric loss tangent at 40GHz of frequency was 0.0174, the dielectric loss tangent at 60GHz of frequency was 0.0165, and the dielectric loss tangent at 80GHz of frequency was 0.0194. The tensile strength of the fiber-reinforced resin molded body was 0. 60GPa, and the tensile modulus was 29. 8GPa.

**Working Example 4**

A fiber-reinforced resin molded body was obtained by the same method as that described in the Working Example 1 except that the fiber-reinforced resin molded body was produced so that the volume content of the polyimide fibers was 58%.

The thickness of the obtained fiber-reinforced resin molded body was 64 μm. The dielectric constant and dielectric loss tangent of the fiber-reinforced resin molded body in the 5GHz to 80GHz of frequency band and the tensile properties of the fiber-reinforced resin molded body were measured by the same method as in the Working Example 1. The dielectric constant at 5GHz of frequency was 3.47, the dielectric constant at 10GHz of frequency was 3.46, the dielectric constant at 20GHz of frequency was 3.45, the dielectric constant at 28GHz of frequency was 3.45, the dielectric constant at 40GHz of frequency was 3.43, the dielectric constant at 60GHz of frequency was 3.40, and the dielectric constant at 80GHz of frequency was 3.39. The dielectric loss tangent at 5GHz of frequency was 0.0137, the dielectric loss tangent at 10GHz of frequency was 0.0138, the dielectric loss tangent at 20GHz of frequency was 0.0138, the dielectric loss tangent at 28GHz of frequency was 0.0134, the dielectric loss tangent at 40GHz of frequency was 0.0137, the dielectric loss tangent at 60GHz of frequency was 0.0155, and the dielectric loss tangent at 80GHz of frequency was 0.0133. The tensile strength of the fiber-reinforced resin molded body was 1. 50GPa, and the tensile modulus was 43. 1GPa.

**Working Example 5**

A fiber-reinforced resin molded body was obtained by the same method as that described in the Working Example 1 except that the fiber-reinforced resin molded body was produced so that the volume content of the polyimide fibers was 45%.

The thickness of the obtained fiber-reinforced resin molded body was 83 μm. The dielectric constant and dielectric loss tangent of the fiber-reinforced resin molded body in the 5GHz to 80GHz of frequency band and the tensile properties of the fiber-reinforced resin molded body were measured by the same method as in the Working Example 1. The dielectric constant at 5GHz of frequency was 3.34, the dielectric constant at 10GHz of frequency was 3.33, the dielectric constant at 20GHz of frequency was 3.35, the dielectric constant at 28GHz of frequency was 3.25, the dielectric constant at 40GHz of frequency was 3.27, the dielectric constant at 60GHz of frequency was 3.25, and the dielectric constant at 80GHz of frequency was 3.19. The dielectric loss tangent at 5GHz of frequency was 0.0193, the dielectric loss tangent at 10GHz of frequency was 0.0195, the dielectric loss tangent at 20GHz of frequency was 0.0182, the dielectric loss tangent at 28GHz of frequency was 0.0179, the dielectric loss tangent at 40GHz of frequency was 0.0190, the dielectric loss tangent at 60GHz of frequency was 0.0154, and the dielectric loss tangent at 80GHz of frequency was 0.0169. The tensile strength of the fiber-reinforced resin molded body was 0. 75GPa, and the tensile modulus was 32. 1GPa.

(Comparative Example 1)

A fiber-reinforced resin molded body was obtained by the same method as in the Working Example 1 except that the polyimide fibers were replaced with aramid fibers (Kevler® 49 manufactured by Du Pont-Toray Co., Ltd., fiber size: 12 $\mu$m, tensile strength: 3.0GPa, tensile modulus: 112GPa) and the fiber weight was 54g/m$^2$.

The thickness of the obtained fiber-reinforced resin molded body was 62 $\mu$m, and the volume content of the aramid fibers was 56.3%. The dielectric constant and dielectric loss tangent of the fiber-reinforced resin molded body in the 5GHz to 80GHz of frequency band and the tensile properties of the fiber-reinforced resin molded body were measured by the same method as that described in the Working Example 1. The dielectric constant at 5GHz of frequency was 3.63, the dielectric constant at 10GHz of frequency was 3.63, the dielectric constant at 20GHz of frequency was 3.58, and the dielectric constant at 28GHz of frequency was 3.56. The dielectric loss tangent at 5GHz of frequency was 0.0201, the dielectric loss tangent at 10GHz of frequency was 0.0210, the dielectric loss tangent at 20GHz of frequency was 0.0226, and the dielectric loss tangent at 28GHz of frequency was 0.0223. The dielectric constant and dielectric loss tangent in the 40GHz or higher of frequency band could not be measured because of large loss. The tensile strength of the fiber-reinforced resin molded body was 1.53GPa, and the tensile modulus was 54. 1GPa.

(Comparative Example 2)

A fiber-reinforced resin molded body was obtained by the same method as in the Working Example 1 except that the polyimide fibers were placed with glass fibers (ECG150 1/0 manufactured by Nitto Boseki Co., Ltd.).

The thickness of the obtained fiber-reinforced resin molded body was 70 $\mu$m, and the volume content of the glass fibers was 55.7%. The dielectric constant and dielectric loss tangent of the fiber-reinforced resin molded body in the 5GHz to 80GHz of frequency band and the tensile properties of the fiber-reinforced resin molded body were measured by the same method as in the Working Example 1. The dielectric constant at 5GHz of frequency was 4.85, the dielectric constant at 10GHz of frequency was 5.03, the dielectric constant at 20GHz of frequency was 4.77, the dielectric constant at 28GHz of frequency was 4.78, and the dielectric constant at 40GHz of frequency was 4.74. The dielectric loss tangent at 5GHz of frequency was 0.0148, the dielectric loss tangent at 10GHz of frequency was 0.0162, the dielectric loss tangent at 20GHz of frequency was 0.0199, the dielectric loss tangent at 28GHz of frequency was 0.0238, and the dielectric loss tangent at 40GHz of frequency was 0.0221. Further, the dielectric constant and the dielectric loss tangent in the 60GHz or higher of frequency band could not be measured because of large loss. The tensile strength of the fiber-reinforced resin molded body was 1. 42GPa, and the tensile modulus was 33. 2GPa.

(Comparative Example 3)

A fiber-reinforced resin molded body was obtained by the same method as in the Working Example 1 except that the UD prepreg was replaced with a unidirectional carbon-fiber prepreg (P3252S-10 manufactured by Toray Industries, Inc.).

The thickness of the obtained fiber-reinforced resin molded body was 94 $\mu$m, and the volume content of the carbon fibers was 59%. In addition, an attempt was made to measure the dielectric constant and the dielectric loss tangent of the fiber-reinforced resin molded body in the 5GHz to 80GHz of frequency band by the same method as that described in the Working Example 1. However, the dielectric constant and the dielectric loss tangent could not be measured because the fiber-reinforced resin molded body was a conductor. The tensile properties of the molded article were measured by the same method as in the Working Example 1. The tensile strength was 2.46GPa, and the tensile modulus was 117.2GPa.

**Claims**

1. A fiber-reinforced resin molded body comprising:

    A polyimide fiber, and
    a resin
    wherein
    a dielectric constant in a frequency band of 5GHz or more and 80GHz or less is 4.0 or less, and
    a dielectric loss tangent in the frequency band is 0.02 or less.

2. The fiber-reinforced resin molded body according to claim 1, a tensile strength is in a range of 0. 5GPa or more and 2. 5GPa, and
    the tensile modulus is in a range of 25GPa or more and 120GPa or less.

3. The fiber-reinforced resin molded body according to claim 1 or 2, wherein the polyimide fiber is obtained by a polymerization reaction of an aromatic tetracarboxylic dianhydride and an aromatic diamine, and

    the aromatic tetracarboxylic dianhydride is at least one of pyromellitic dianhydride and 3,3',4,4'-biphenyltetracarboxylic dianhydride, and
    the aromatic diamine is at least one of 4,4'-diaminodiphenyl ether and para-phenylene diamine.

4. The fiber-reinforced resin molded body according to claim 1 or 2, wherein the polyimide fiber has a tensile modulus in a range of 100GPa or more and 170GPa or less.

5. A prepreg comprising a polyimide fiber and a resin or a resin precursor for being used for producing the fiber-reinforced resin molded body according to claim 1 or 2.

## INTERNATIONAL SEARCH REPORT

| International application No. |
| --- |
| **PCT/JP2023/021355** |

| A. | CLASSIFICATION OF SUBJECT MATTER |
| --- | --- |

*C08J 5/04*(2006.01)i
FI:   C08J5/04 CEZ

According to International Patent Classification (IPC) or to both national classification and IPC

| B. | FIELDS SEARCHED |
| --- | --- |

Minimum documentation searched (classification system followed by classification symbols)

C08J5/04

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | JP 2004-324007 A (UNITIKA LTD) 18 November 2004 (2004-11-18) | 1, 5 |
|   | claims, paragraphs [0056]-[0065], examples, table 2 |   |
| Y |   | 1-5 |
| X | JP 2017-186718 A (IST CORP) 12 October 2017 (2017-10-12) | 1-5 |
|   | claims, paragraphs [0002]-[0003], [0037], [0039], [0070]-[0072], [0144], examples, table 2 |   |
| Y |   | 1-5 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **01 August 2023** | **15 August 2023** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

## INTERNATIONAL SEARCH REPORT
### Information on patent family members

International application No.

**PCT/JP2023/021355**

| Patent document cited in search report | | | Publication date (day/month/year) | Patent family member(s) | Publication date (day/month/year) |
|---|---|---|---|---|---|
| JP | 2004-324007 | A | 18 November 2004 | (Family: none) | |
| JP | 2017-186718 | A | 12 October 2017 | US 2017/0283990 A1<br>claims, paragraphs [0002]-[0003], [0039], [0042], [0074]-[0076], examples, table 2 | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016166347 A